# EUROPÄISCHE PATENTSCHRIFT

(11) **EP 2 855 204 B1**
(45) Veröffentlichungstag und Bekanntmachung des Hinweises auf die Patenterteilung: **13.04.2016**
(21) Anmeldenummer: 13720327.9
(22) Anmeldetag: 25.04.2013
(51) Int. Cl.: B60P 7/08

(54) **ZUGAUFNAHMEMITTEL**
TENSION ABSORBING MEANS
MOYEN D'ABSORPTION DE TRACTION

(30) Priorität: 25.05.2012 DE 102012010256
(43) Veröffentlichungstag der Anmeldung: 08.04.2015
(73) Patentinhaber: SpanSet Inter AG, 8832 Wollerau (CH)
(72) Erfinder: MAMIÉ, André, CH-8820 Wädenswil (CH); DOHSE, Lars, 52076 Aachen (DE)
(74) Vertreter: Cohausz & Florack
(86) Internationale Anmeldenummer: PCT/EP2013/058569
(87) Internationale Veröffentlichungsnummer: WO 2013/174607

(56) Entgegenhaltungen:
- WO-A2-2004/063460
- US-A- 4 769 875
- US-A- 5 673 464

## Beschreibung

Die Erfindung betrifft ein Zugaufnahmemittel, das aus einem biegeschlaffen, nur auf Zug belastbaren Strang hergestellt ist. Solche Zugaufnahmemittel werden in der Praxis zum Abspannen, Halten, Sichern, Ziehen, Heben, Befestigen und Verstauen von Gütern und Personen eingesetzt. Dabei erfolgt die Krafteinleitung in der Regel über zwei Anschlagpunkte, zwischen denen das Zugaufnahmemittel verspannt ist. Im Fall, dass Zugaufnahmemittel der hier in Rede stehenden Art zum Anheben von Gütern genutzt werden, werden sie in der Fachsprache auch als "Anschlagmittel" bezeichnet.

Ein Zugaufnahmemittel ist in US 4,769,875 offenbart.

Als Zugaufnahmemittel können Seile, Ketten, Bänder, Schlingen und desgleichen eingesetzt werden. Seile und Bänder haben dabei den Vorteil, dass sie kostengünstig als Endlosware hergestellt werden können, von der das jeweilige Seil oder Band mit der benötigten Länge abgelängt werden kann. Dem steht der Nachteil gegenüber, dass nach dem Ablängen die Länge von Seilen und Bändern nur durch Eingriffe, wie Knoten- oder Schlaufenbildung, durch die die Funktionssicherheit beeinträchtigt werden kann, oder unter Zuhilfenahme zusätzlicher Bauteile, wie Spannelemente, Haken, Ösen und desgleichen, verkürzt werden kann. Auch müssen für eine ordnungsgemäße Verstauung der jeweils überschüssigen Seil- oder Bandlänge zusätzliche Maßnahmen getroffen werden. Diese sind insbesondere dann aufwändig, wenn das jeweilige Seil oder Band eine gewisse Eigensteifigkeit hat und dem entsprechend nur über große Radien gewickelt oder zusammengelegt werden kann.

Ketten dagegen lassen sich aufgrund der ihnen eigenen Vielgelenkigkeit problemlos auch dann auf engstem Raum drapieren, wenn ihre Kettenglieder aus formfesten Material bestehen. Darüber hinaus kann die Nutzlänge von als Zugaufnahmemittel verwendeten Ketten auf einfache Weise an die sich in der Praxis stellenden Anforderungen angepasst werden, indem beispielsweise zum Ankoppeln an das jeweils zu befestigende Gut ein geeignetes Anschlagglied, wie Haken oder Schäkel, in dasjenige Kettenglied gehängt wird, dessen Abstand zum einen Kettenende dem Abstand zwischen den für die Befestigung mittels der Kette miteinander zu verbindenden Anschlagpunkten entspricht. Auch können die einzelnen Kettenglieder problemlos genutzt werden, um weitere Zugaufnahmemittel mit der Kette zu verkoppeln. Ein Nachteil von Ketten besteht allerdings darin, dass ihre Fertigung aufwändig ist. Dies gilt unabhängig davon, aus welchem Material sie hergestellt sind. So ist es stets erforderlich, die Kettenglieder einzeln vorzufertigen. Dabei muss zumindest jedes zweite Kettenglied zunächst offenbleiben, um es beim Zusammenfügen der Kette mit den Kettengliedern zu verbinden, zwischen denen es angeordnet ist. Nach dem Zusammenfügen müssen die zuvor offenen Kettenglieder geschlossen werden.

Hochbelastete, als Zugaufnahmemittel eingesetzte Ketten sind auch heute üblicherweise aus Stahlvollmaterial hergestellt. Die Kettenglieder sind dabei in der Regel durch Schmieden oder Biegen hergestellt. Jedoch sind auch Ketten im Einsatz, die aus einem biegeschlaffen Strangmaterial gefertigt sind. Bei solchen Ketten sind die einzelnen Kettenglieder beispielsweise aus Textil- oder Drahtabschnitten hergestellt, die zu Ringen geformt sind. Die Vorteile von Ketten gegenüber konventionellen, als Zugaufnahmemittel verwendeten Seilen oder Bändern liegen darin, dass sie problemlos verkürzt und ebenso problemlos auch dann verstaut werden können, wenn sie aus Materialien hergestellt sind, die nur eine geringe Biegsamkeit besitzen. Insbesondere wenn die Ketten aus textilem Material bestehen, kommen zu ihrer guten Verstaubarkeit ihr geringes Gewicht und ihre damit einhergehende einfache Handhabbarkeit hinzu. In der Praxis erweist es sich darüber hinaus als günstig, dass bei einem Kontakt von aus textilem Material bestehenden Ketten mit anderen Bauteilen die Gefahr von Beschädigungen sehr viel geringer ist als bei Ketten, die aus Stahl oder anderen harten Werkstoffen bestehen. Darüber hinaus sind Ketten aus textilem Material unempfindlich gegen Feuchtigkeit und eignen sich daher insbesondere auch für Einsatzgebiete, in denen aus konventionellem Stahl bestehende Ketten hoher Korrosion ausgesetzt wären.

Diesen Vorteilen steht jedoch auch bei Ketten, deren Glieder aus Strangmaterial geformt sind, der Nachteil gegenüber, dass auch solche Ketten nur mit hohem Aufwand gefertigt werden können. Unabhängig davon, aus welchem biegsamen Material der Strang besteht, aus dem die einzelnen Kettenglieder geformt sind, erweisen sich dabei die Fügestellen, an denen die einzelnen Glieder der Kette jeweils zu einem Ring zusammengefügt sind, als Schwachpunkte, die in der Praxis regelmäßiger Inspektion bedürften und die Tragfähigkeit von aus textilem Material bestehenden Ketten beeinträchtigen können.

Vor dem Hintergrund des voranstehend erläuterten Standes der Technik bestand die Aufgabe darin, ein Zugaufnahmemittel zu schaffen, das die Vorzüge einer aus Strangmaterial geformten Kette besitzt, gleichzeitig aber auf einfache Weise kostengünstig herstellbar ist.

Diese Aufgabe ist erfindungsgemäß durch ein gemäß Anspruch 1 ausgebildetes Zugaufnahmemittel gelöst worden.

Vorteilhafte Ausgestaltungen und Varianten der Erfindung sind in den abhängigen Ansprüchen angegeben und werden nachfolgend wie der allgemeine Erfindungsgedanke im Einzelnen erläutert.

Ein erfindungsgemäßes Zugaufnahmemittel ist demnach aus einem biegeschlaffen, nur auf Zug belastbaren Strang hergestellt. Erfindungsgemäß ist dieser Strang zu drei oder mehr Schlaufenabschnitten gelegt, so dass ausgehend vom Anfang des Strangs auf jeden in Richtung des Anfangs versetzt angeordneten vorangehenden Schlaufenabschnitt ein in Richtung des Endes des Strangs versetzt angeordneter folgender Schlaufenabschnitt folgt, bis der letzte Schlaufenabschnitt erreicht ist. Jeder Schlaufenabschnitt weist dabei eine Schlaufe auf, die eine Schlaufenöffnung umgrenzt. Indem ein folgender Schlaufenabschnitt mit seiner Schlaufe durch die Schlaufenöffnung eines zu ihm benachbart angeordneten vorangehenden Schlaufenabschnitts geführt ist, ist aus dem mit den Schlingenabschnitten versehenen Strang mindestens eine Masche gebildet.

Selbstverständlich weist das erfindungsgemäße Zugaufnahmemittel vorteilhafterweise eine größere Zahl von in erfindungsgemäßer Weise gebildeten Maschen auf. Die Maschen eines erfindungsgemäßen Zugaufnahmemittels umschließen vergleichbar mit einem Kettenglied jeweils eine Öffnung, die zum Einhängen eines zusätzlichen Bauteils, wie beispielsweise einem zum Verkürzen der Wirklänge des Zugaufnahmemittels verwendeten Hakens, oder zum Ankoppeln weiterer Zugaufnahmemittel genutzt werden kann.

Obwohl ein erfindungsgemäßes Zugaufnahmemittel aus einem einzigen Strang gebildet ist, lässt es sich somit wie eine aus flexiblem Material geformte Kette nutzen, die aus einzelnen Kettengliedern zusammengesetzt ist. Die in erfindungsgemäßer Weise erfolgende Vermaschung eines einzigen Strangs erlaubt es dabei, ein erfindungsgemäßes Zugaufnahmemittel aus Endlosware herzustellen. Von dieser Endlosware wird wie bei der Herstellung von strangartigen Zugaufnahmemitteln jeweils ein Strang abgeteilt, der die zur Herstellung eines Zugaufnahmemittels von bestimmter Länge jeweils benötigte Nutzlänge aufweist. Der abgeteilte Strang wird anschließend zu den Schlaufenabschnitten zusammengelegt, die daraufhin fixiert und unter Ausbildung der Maschen vermascht werden.

Die Fertigung eines erfindungsgemäßen Zugaufnahmemittels kann somit zum weitaus größten Teil rein maschinell im kontinuierlichen Durchlauf erfolgen, so dass kostengünstig und mit geringem Zeitaufwand große Stückzahlen eines erfindungsgemäßen Zugaufnahmemittels produziert werden können. Die Erfindung verbindet so die praktischen Vorteile einer Kette mit den Kosten- und Produktionsvorteilen, die strangförmige Zugaufnahmemittel, wie Seile oder Bänder, mit sich bringen.

Grundsätzlich eignet sich jedes ausreichend biegeverformbare und gleichzeitig auf Zug belastbare Material als Strang für die Fertigung eines erfindungsgemäßen Zugaufnahmemittels. So ist es beispielsweise denkbar, das Zugaufnahmemittel aus Drahtseil oder desgleichen zu fertigen. Optimale Gebrauchseigenschaften bei gleichzeitig einfacher Fertigung ergeben sich jedoch dann, wenn es sich bei dem Strang, aus dem das jeweilige erfindungsgemäße Zugaufnahmemittel gefertigt ist, um ein textiles Material handelt. So eignet sich als Strangmaterial beispielsweise Kernmantelseil, geschlagenes Seil, flach gewebtes Band, schlauchförmig gewebtes Band, Hohlgeflecht, Kompaktgeflecht oder auch paralleles Fasergelege.

Eine die Fertigung und Belastbarkeit optimierende Ausgestaltung eines erfindungsgemäßen Zugaufnahmemittels besteht dabei darin, dass jeder Schlaufenabschnitt zwei Längenabschnitte aufweist, die jeweils mit ihrem einen Ende an die Schlaufe des jeweiligen Schlaufenabschnitts angrenzen und über ihre Länge aneinander liegend dauerhaft fest miteinander verbunden sind. Die Fixierung der einzelnen Schlaufenabschnitte erfolgt in diesem Fall also dadurch, dass die aneinander liegenden Längenabschnitte der jeweiligen Schlaufenabschnitte fest miteinander verbunden werden. Die Verbindung der Längenabschnitte der Schlaufenabschnitte kann beispielsweise kraft- oder formschlüssig erfolgen, wobei sich beide Verbindungsarten selbstverständlich ergänzen können. Auch ist bei geeigneten Materialien eine stoffschlüssige Verbindung beispielsweise durch Verschweißen oder Verkleben denkbar. Die Verbindung der Längenabschnitte muss dabei so dauerhaft sein, dass sie auch den unter rauen Umweltbedingungen auftretenden Belastungen sicher standhält. Hierzu kann die Verbindung der Längenabschnitte der Schlaufenabschnitte jeweils mittels durch ein die Längenabschnitte durchgreifendes Verbindungselement erfolgen. Solche Verbindungselemente können Nieten, Ösen, Schrauben und desgleichen sein. Genauso fallen unter die die Längenabschnitte durchgreifenden Verbindungsmittel Fäden oder Drähte, durch die die Längenabschnitte der Schlaufenabschnitte jeweils miteinander vernäht sind. Ebenso können die jeweils zu verbindenden Längenabschnitte miteinander verspleißt sein.

Alternativ oder ergänzend zu einer Verbindung durch die Längenabschnitte durchgreifende Verbindungselemente kann die dauerhafte Verbindung der Längenabschnitte der Schlaufenabschnitte mit Hilfe eines die jeweiligen Längenabschnitte umgreifenden Verbindungselements erfolgen. Bei einem solchen Verbindungselement kann es sich beispielsweise um eine Klemme, eine Hülse oder desgleichen handeln, die die miteinander zu verbindenden Längenabschnitte des jeweiligen Schlaufenabschnitts gegeneinander pressen. Ebenso beispielsweise kann die Verbindung der Längenabschnitte durch Umwickeln mittels eines geeigneten Fadens oder Drahts erfolgen.

Für bestimmte Anwendungen kann es zweckmäßig sein, am Anfang des erfindungsgemäßen Zugaufnahmemittels zunächst einen längeren strangartigen Anfangsabschnitt vorzusehen, der nicht vermascht ist. Der betreffende Anfangsabschnitt kann für eine Verbindung mit bestimmten Bauteilen zur Verfügung stehen oder genutzt werden, um die Handhabung des Zugaufnahmemittels zu vereinfachen.

Die Ketteneigenschaft eines erfindungsgemäßen Zugaufnahmemittels lässt sich allerdings dann optimal nutzen, wenn eine erste Masche des Strangs durch den dem Anfang des Strangs zugeordneten ersten vorangehenden Schlaufenabschnitt und einen benachbart dazu angeordneten folgenden Schlaufenabschnitt gebildet ist, wobei der Anfang des Strangs, aus dem das Zugaufnahmemittel hergestellt ist, den Anfang des einen Längenabschnitts des ersten Schlaufenabschnitts bildet. In diesem Fall ist unmittelbar am Anfang des Zugaufnahmemittels eine Masche vorhanden, die wie das erste Kettenglied einer Kette beispielsweise mit einem Anschlagglied, wie einem Haken, Schäkel oder desgleichen, verhakt oder über einen Poller oder einen anderen Anschlagpunkt geworfen werden kann.

Grundsätzlich ist es möglich, die erfindungsgemäße Maschenbildung nur über bestimmte Längenabschnitte des Zugaufnahmemittels vorzunehmen. Zwischen den vermaschten Längenabschnitten ist dann jeweils ein einfacher Strangabschnitt vorhanden, der nach Art eines Seils oder Bands ausgebildet ist. Sollen jedoch die Ketteneigenschaften eines erfindungsgemäßen Zugaufnahmemittels optimal genutzt werden können, ist es zweckmäßig, wenn der Strang regelmäßig vermascht ist, indem unter Ausbildung jeweils einer Masche jeder folgende Schlaufenabschnitt durch die Schlaufenöffnung des bezogen auf ihn jeweils nächstbenachbart angeordneten vorangehenden Schlaufenabschnitts geführt ist.

Demselben Zweck dient es, wenn die zwischen den Schlaufenabschnitten vorhandenen Teilstücke des Strangs gleich lang sind. Eine regelmäßig gleich große Ausbildung der Maschenöffnungen ergibt sich dabei dadurch, dass auch die Länge der Schlaufenabschnitte gleich ist.

Aus fertigungstechnischer Sicht vorteilhaft ist es zudem, wenn die Länge der Längenabschnitte der Schlaufenabschnitte gleich ist.

Das erfindungsgemäße Zugaufnahmemittel kann problemlos mit weiteren Funktionselementen versehen werden. So kann es beispielsweise zweckmäßig sein, an dem Zugaufnahmemittel Distanzgeber oder Stabilisatoren vorzusehen, um seine Handhabung zu vereinfachen. Auch kann einem unter bestimmten Einsatzbedingungen möglicherweise eintretenden Verschleiß dadurch begegnet werden, dass das Zugaufnahmemittel mit einem gesonderten Schutz- oder Lagerelement versehen wird, das einen erhöhten Verschleißwiderstand aufweist oder ein besonders gutes Gleiten auf dem jeweiligen Anschlagpunkt oder Bauteil ermöglicht, mit dem der betreffende Abschnitt des Zugaufnahmemittels in Kontakt kommt. Genauso können beispielsweise die Schlaufen der Schlaufenabschnitte durch Kauschen oder andere gleichwirkende Elemente verstärkt sein, um hier vorzeitigem Verschleiß vorzubeugen.

Um die Ankopplung des erfindungsgemäßen Zugaufnahmemittels an einen Anschlagpunkt zu erleichtern, kann am Ende des Strangs ein Befestigungsabschnitt ausgebildet sein, der dazu vorgesehen ist, mit einem Bauteil verkoppelt zu werden. Bei dem betreffenden Bauteil kann es sich beispielsweise um ein Anschlagglied handeln, das einerseits mit dem Befestigungsabschnitt verkoppelt ist und gleichzeitig durch die Schlaufenöffnung des letzten, dem Ende des Strangs zugeordneten Schlaufenabschnitts greift. Hierzu kann beispielsweise der Befestigungsabschnitt ebenfalls als Schlaufenabschnitt mit einer Schlaufenöffnung ausgebildet sein, durch die das jeweilige Anschlagglied greift.

Nachfolgend wird die Erfindung anhand von Ausführungsbeispielen näher erläutert. Es zeigen jeweils schematisch:
- Fig. 1: einen zu Schlaufenabschnitten und einem Endabschnitt zusammengelegten textilen Strang;

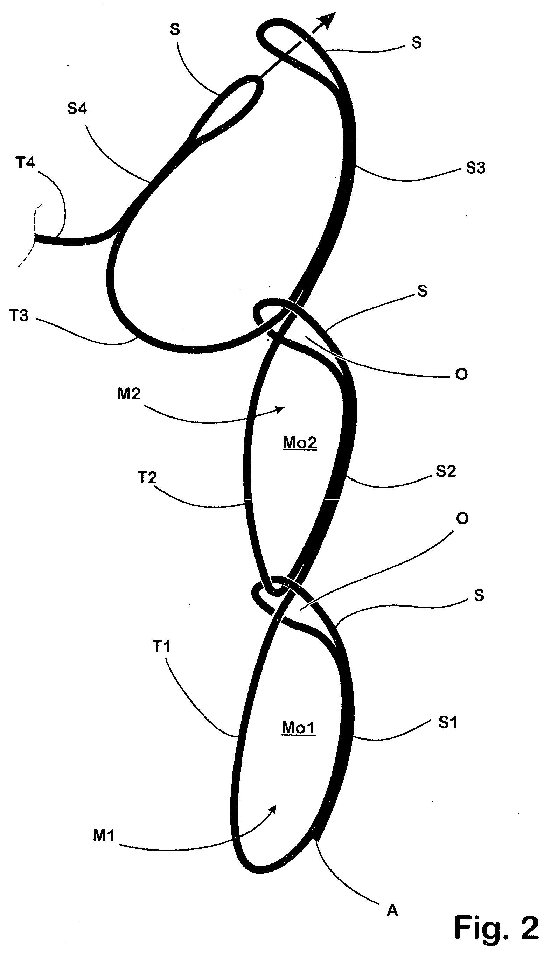

- Fig. 2: den Strang gemäß Fig. 1 bei der Herstellung eines kettenartigen Zugaufnahmemittels;
- Fig. 3: das aus dem Strang gemäß Fig. 1 gebildete Zugaufnahmemittel;
- Fig. 4: den Kraftfluss in einem gemäß Fig. 3 ausgebildeten Zugaufnahmemittel beim Heben einer Last G.

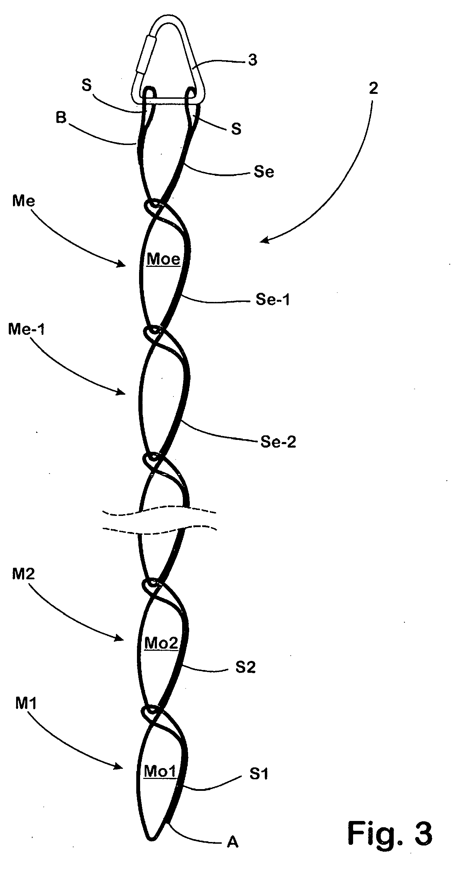

Bei dem Strang 1, aus dem das in Fig. 3 dargestellte kettenartige Zugaufnahmemittel 2 gefertigt wird, handelt es sich beim hier beschriebenen Beispiel um ein in konventioneller Weise aus textilen Fasern flachgewebtes textiles Band. Der Strang 1 ist in der erforderlichen Länge von einer Endlosware abgelängt worden, die von einer hier nicht gezeigten Maschine in einem kontinuierlichen Verfahrensablauf in konventioneller Weise gewebt wird.

Ausgehend von seinem Anfang A ist der Strang 1 zu Schlaufenabschnitten S1,S2,S3,S4,...,Se-1,Se zusammengelegt. Die Schlaufenabschnitte S1,...,Se umfassen jeweils einen dem Anfang A des Strangs 1 zugeordneten anfangsseitigen Längenabschnitt La und einen dem Ende E des Strangs 1 zugeordneten endseitigen Längenabschnitt Le sowie eine zwischen den Längenabschnitten La,Le gebildete Schlaufe S, die eine Schlaufenöffnung O umgrenzt. Der Anfang A des Strangs bildet dabei den Anfang des anfangsseitigen Längenabschnitts La des dem Anfang A zugeordneten ersten Schlaufenabschnitts S1. Die Längenabschnitte La,Le jedes Schlaufenabschnitts S1,...,Se sind durch in konventioneller Weise ausgeführte Nähte N dauerhaft fest miteinander verbunden.

Die zueinander benachbarten Schlaufenabschnitten S1,...,Se sind jeweils durch ein Teilstück T1,T2,...,Te des Strangs 1 aneinander angeschlossen. Dementsprechend folgt ausgehend vom Anfang A des Strangs 1 auf jeden Schlaufenabschnitt S1,... ein "folgender Schlaufenabschnitt" S2,... bis der dem Ende E des Strangs 1 zugeordnete letzte Schlaufenabschnitt Se erreicht ist. Genauso ist jedem folgenden Schlaufenabschnitt S2,....ein bezogen auf diesen Schlaufenabschnitt S2,... jeweils nächstbenachbart und in Richtung des Anfangs A versetzt angeordneter "vorangehender Schlaufenabschnitt" S1,... zugeordnet.

Am Ende E des Strangs 1 ist ein Befestigungsabschnitt B ausgebildet, der beim hier beschriebenen Beispiel genauso geformt ist wie die Schlaufenabschnitte S1,...,Se. Dementsprechend weist auch der Befestigungsabschnitt B einen anfangsseitigen Längenabschnitt La und einen endseitigen Längenabschnitt Le sowie eine dazwischen angeordnete Schlaufe S auf, die eine Schlaufenöffnung O umschließt. Das Ende E des Strangs 1 bildet dabei das Ende des endseitigen Längenabschnitts Le des Befestigungsabschnitts B.

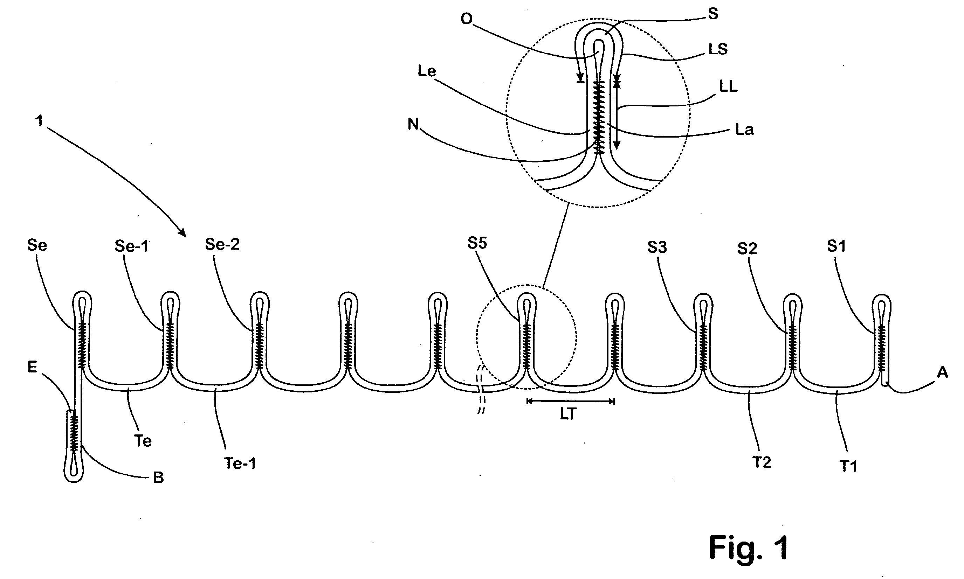

Die Längenabschnitte La,Le und die Schlaufen S der Schlaufenabschnitte S1,...,Se sowie des Befestigungsabschnitts B weisen jeweils die gleiche Länge LL und LS auf. Genauso sind die Teilstücke T1,...,Te jeweils gleich lang, wobei die Länge LT der Teilstücke T1,...,Te in Fig. 1 nicht maßstabsgerecht dargestellt ist.

Zum Herstellen des Zugaufnahmemittels 2 wird der mit den Schlaufenabschnitten S1,...,Se versehene Strang 1 vermascht. Dazu wird im ersten Schritt nur der ausgehend vom Anfang A des Strangs 1 in Bezug auf den Schlaufenabschnitt S1 folgende Schlaufenabschnitt S2 durch die Schlaufe S des in Bezug auf den Schlaufenabschnitt S2 vorangehenden Schlaufenabschnitts S1 geschoben. Dabei bildet sich eine erste Masche M1, die eine dem Anfang A zugeordnete erste Maschenöffnung Mo1 umschließt. Das den Schlaufenabschnitt S2 und den in Richtung des Endes E des Strangs 1 folgenden Schlaufenabschnitt S3 verbindende Teilstück T2 des Strangs wird dann um die Schlaufe S herumgeführt und nur der Schlaufenabschnitt S3 durch die Schlaufe S des Schlaufenabschnitts S2 geschoben. Dabei bildet sich eine zweite Masche M2, die die Maschenöffnung Mo2 umschließt. Dieser Vorgang wird unter Bildung der Maschen M3 ... Me für die Schlaufenabschnitte S3,...,Se fortgesetzt, bis der letzte Schlaufenabschnitt Se durch die Schlaufe S des in Bezug auf ihn vorangehenden Schlaufenabschnitt Se-1 geschoben und die letzte Masche Me gebildet ist.

Anschließend wird ein Anschlagglied 3, bei dem es sich, wie in Fig. 3 dargestellt, beispielsweise um eine Schraubtriangel handeln kann, durch die Schlaufen S des letzten Schlaufenabschnitts Se und des Befestigungsabschnitts B geschoben. Das Anschlagglied 3 stellt sicher, dass der Schlaufenabschnitt Se seinen Platz beibehält und es nicht zur selbsttätigen Entmaschung des Zugaufnahmemittels 2 kommt. Dabei kann das Anschlagglied 3 unmittelbar zum Ankoppeln des Zugaufnahmemittels 2 an einen hier nicht gezeigten Anschlagpunkt genutzt werden. Genauso kann das Anschlagglied 3 jedoch zum Gebrauch des Zugaufnahmemittels 2 entfernt und durch ein anderes Anschlagglied ersetzt werden. Dieses greift dann optimalerweise ebenfalls gleichzeitig durch die Schlaufen S von Befestigungsabschnitt B und letztem Schlaufenabschnitt Se. Jedoch ist es auch denkbar, für eine Verbindung mit dem jeweiligen Transportgut jeweils ein Anschlagglied in eine der Schlaufen S von Befestigungsabschnitt B und Schlaufenabschnitt Se greifen zu lassen.

Mit dem erfindungsgemäßen Zugaufnahmemittel 2 steht somit ein Produkt zur Verfügung, das aus einem textilen Strang 1 geformt wird, dessen Querschnittsfläche im Verhältnis zu seiner Längenausdehnung sehr gering ist. Der Strang 1 ist dabei beispielsweise direkt ab Webstuhl mit anschließender Schlaufenfixierung und Vermaschung endlos herstellbar, wobei er entweder jeweils längengerecht produziert oder von einer Endlosware auf Nutzlänge zugeschnitten werden kann, ohne den Fertigungsprozess zu unterbrechen.

Im Verlaufe des Strangs 1 sind in einer periodischen Folge, durch eine geeignete Fügetechnik fixierte Schlaufenabschnitte S1 - Se ausgebildet, von denen im Sinne einer Vermaschung jeweils ein nachfolgende Schlaufenabschnitt S2 - Se durch die Schlaufe S des ihm jeweils vorangehenden Schlaufenabschnitts S1 - Se-1 geführt ist. Am Ende des Vermaschungsprozesses wird ein Abschluss gebildet, indem die Schlaufe S des letzten Schlaufenabschnitts Se und die Schlaufe S des Befestigungsabschnitts B in einen Endbeschlag, das Anschlagglied 3, oder in ein anderes Bauteil eingehängt werden.

Auf diese Weise kann das so gebildete Zugaufnahmemittel 2 Kräfte zwischen dem durch das Anschlagglied 3 gebildeten Strangabschluss und jeder beliebigen Masche M1 - Me aufnehmen. Dabei wird ein Teil der eingeleiteten Kraft jeweils an den Verschlaufungen vorbei von einer Masche in die nächste geleitet, so dass die durch die jeweilige Naht N gebildete Verbindung der Längenabschnitte La,Le der Schlaufenabschnitte S1 - Se im Verhältnis zur eingeleiteten Gesamtkraft nur sehr geringe Belastungen ausgesetzt ist.

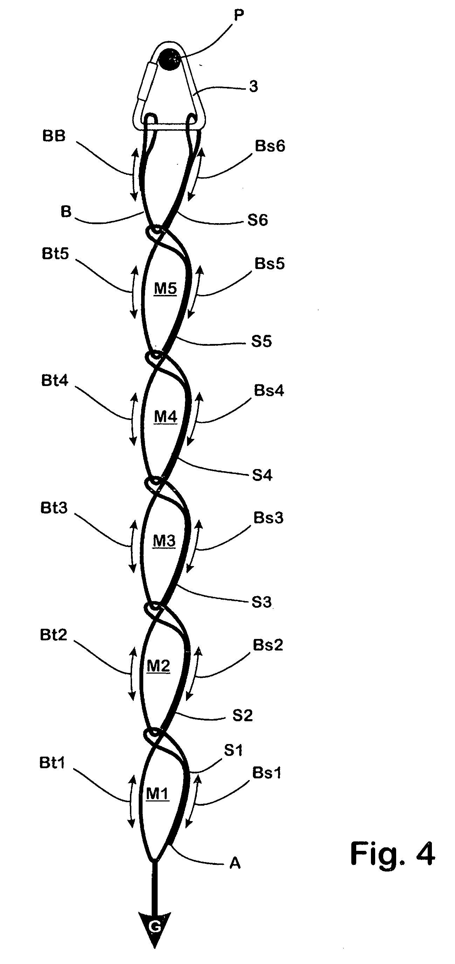

In Fig. 4 ist ein an einem Anschlagpunkt P aufgehängtes erfindungsgemäßes Zugaufnahmemittel 2 beim Heben einer Last G dargestellt. Das Zugaufnahmemittel 2 umfasst fünf in der voranstehend erläuterten Weise gebildete Maschen M1 - M5. Bei dem Aufhängepunkt P kann es sich beispielsweise um den Haken eines hier nicht dargestellten Krans handeln. Unter Wirkung der Last G nehmen die Teilstücke T1 - T5, der Befestigungsabschnitt B und die Schlaufenabschnitte S1 - S6 die Lastanteile Bt1 - Bt5, BB und BS1 - BS6 auf, wobei sich die Lastanteile BS1 - BS6 der Schlaufenabschnitte S1 - S6 zu gleichen Teilen auf die Längenabschnitte La,Le des jeweiligen Schlaufenabschnitts S1 - S6 aufteilen.

In Tabelle 1 sind für die Teilstücke T1 - T5, den Befestigungsabschnitt B und die Schlaufenabschnitte S1 - S6 die Lastanteile Bt1 - Bt5, BB und BS1 - BS6 für den Fall angegeben, dass das Zugaufnahmemittel 2 die Last G alleine aufnimmt. Es zeigt sich, dass bei den auf die zweite Masche M2 folgenden Maschen M3 - M5 sowie beim letzten Schlaufenabschnitt S6 und dem Befestigungsabschnitt B die jeweiligen Schlaufenabschnitte S3 - S6 jeweils etwa zwei Drittel der Last G und das jeweils zugeordnete Teilstück T3 - T5 bzw. der Befestigungsabschnitt B den verbleibenden Rest aufnehmen. Die Teilstücke T3 - T5 und die Längenabschnitte La,Le der Schlaufenabschnitte S3 - S6 sind somit im Wesentlichen gleichmäßig belastet.

**Tabelle 1 (Last = G)**

| | Lastanteil | | Lastanteil |
|---|---|---|---|
| T1 | Bt1=50% | S1 | BS1=50% |
| T2 | Bt2=50%/2=25% | S2 | BS2=50%/2+50%=75% |
| T3 | Bt3=75%/2=37,5% | S3 | BS3=75%/2+25%=62,5% |
| T4 | Bt4=62,5%/2=31,25% | S4 | BS4=62,5%/2+37,5%=68,75% |
| T5 | Bt5=68,75%/2=34,38% | S5 | BS5=68,75%/2+31,25%=65,62% |
| B | BB =65,62%/2=32,81% | S6 | BS6=65,62%/2+34,38%=67,19% |

In Tabelle 2 sind für ein Zugaufnahmemittel 2 die von den Teilstücken T1 - T5, dem Befestigungsabschnitt B und den Schlaufenabschnitten S1 - S6 aufgenommenen Lastanteile Bt1 - Bt5, BB und Bs1 - Bs6 für den Fall angegeben, dass die Last G von zwei gleichen Zugaufnahmemitteln 2 getragen wird. Es zeigt sich hier, dass bereits ab der zweiten Masche M2 sowie beim letzten Schlaufenabschnitt S6 und dem Befestigungsabschnitt B die jeweiligen Schlaufenabschnitte S2 - S6 jeweils etwa zwei Drittel der Last G und das jeweils zugeordnete Teilstück T2 - T5 bzw. der Befestigungsabschnitt B den verbleibenden Rest aufnehmen. In diesem Belastungsfall sind somit die Teilstücke T2 - T5 und die Längenabschnitte La,Le der Schlaufenabschnitte S2 - S6 jeweils im Wesentlichen gleich belastet.

**Tabelle 2 (Last = G/2)**

| | Lastanteil | | Lastanteil |
|---|---|---|---|
| T1 | Bt1=25% | S1 | Bs1=25% |
| T2 | Bt2=(50%+25%)/2=37,5% | S2 | Bs2=(50%+25%)/2+25%=62,5% |
| T3 | Bt3=62,5%=31,25% | S3 | Bs3=62,5%/2+37,5%=68,75% |
| T4 | Bt4=68,75%/2=34,38% | S4 | Bs4=68,75%/2+31,25%=65,62% |
| T5 | Bt5=65,62%/2=32,81% | S5 | Bs5=65,62%/2+34,38%=67,19% |
| B | BB =67,19%/2=33,59% | S6 | Bs6=67,19%/2+32,81%=66,41% |

### BEZUGSZEICHEN

- 1: als gewebtes Band vorliegender textiler Strang
- 2: kettenartiges Zugaufnahmemittel
- 3: Anschlagglied
- A: Anfang des Strangs 1
- B: Befestigungsabschnitt des Strangs 1
- Bt1-Bt5: von den Teilstücken T1-T5 übernommene Lastanteile
- Bs1-Bs6: von den Schlaufenabschnitten S1-S5 übernommene Lastanteile
- BB: vom Befestigungsabschnitt übernommener Lastanteil
- E: Ende des Strangs 1
- G: zu hebende Last
- La: jeweiliger anfangsseitiger Längenabschnitt der Schlaufenabschnitte S1-Se
- Le: jeweiliger endseitiger Längenabschnitt der Schlaufenabschnitte S1-Se
- LL: Länge der Längenabschnitte La,Le
- LS: Länge der Schlaufen S
- LT: Länge der Teilstücke T1-Te
- M1-Me: Maschen des Zugaufnahmemittels 1
- Mo1-Moe: jeweilige Maschenöffnung der Maschen M1-Me
- N: die Längenabschnitte La,Le des jeweiligen Schlaufenabschnitts S1-S6 verbindende Naht
- O: Schlaufenöffnung der jeweiligen Schlaufe S
- P: Anschlagpunkt
- S: jeweilige Schlaufe der Schlaufenabschnitte S1-Se
- S1-Se: Schlaufenabschnitte des Strangs 1
- T1-Te: Teilstücke des Strangs 1

## Patentansprüche

1. Zugaufnahmemittel, hergestellt aus einem biegeschlaffen, nur auf Zug belastbaren Strang (1),
**dadurch gekennzeichnet,**
- **dass** der Strang (1) zu drei oder mehr Schlaufenabschnitten (S1,...,Se) gelegt ist,
- **dass** ausgehend vom Anfang (A) des Strangs (1) auf jeden in Richtung des Anfangs (A) versetzt angeordneten vorangehenden Schlaufenabschnitt (S1,...,Se-1) ein in Richtung des Endes des Strangs (1) versetzt angeordneter folgender Schlaufenabschnitt (S2,...,Se) folgt, bis der letzte Schlaufenabschnitt (Se) erreicht ist,
- **dass** jeder Schlaufenabschnitt (S1,...,Se) eine Schlaufe (S) aufweist, die eine Schlaufenöffnung (0) umgrenzt, und
- **dass** aus dem Strang (1) mindestens eine Masche (M1,...,Me) gebildet ist, indem ein folgender Schlaufenabschnitt (S2,...,Se) mit seiner Schlaufe (S) durch die Schlaufenöffnung (0) eines zu ihm benachbart angeordneten vorangehenden Schlaufenabschnitts (S1,...,Se-1) geführt ist.

2. Zugaufnahmemittel nach Anspruch 1, **dadurch gekennzeichnet, dass** jeder Schlaufenabschnitt (S1,...,Se) zwei Längenabschnitte (La,Le) aufweist, die jeweils mit ihrem einen Ende an die Schlaufe (S) des betreffenden Schlaufenabschnitts (S1,...,Se) angrenzen und über ihre Länge (LL) aneinander liegend dauerhaft fest miteinander verbunden sind,

3. Zugaufnahmemittel nach einem der voranstehenden Ansprüche, **dadurch gekennzeichnet, dass** eine erste Masche (Mo1) des Strangs (1) durch den dem Anfang (A) des Strangs (1) zugeordneten ersten vorangehenden Schlaufenabschnitt (S1) und einen benachbart dazu angeordneten folgenden Schlaufenabschnitt (S2) gebildet ist und **dass** der Anfang (A) des Strangs (1), aus dem das Zugaufnahmemittel (2) hergestellt ist, den Anfang (A) des einen Längenabschnitts (La) des ersten Schlaufenabschnitts (S1) bildet.

4. Zugaufnahmemittel nach einem der voranstehenden Ansprüche, **dadurch gekennzeichnet, dass** der Strang (1) regelmäßig vermascht ist, indem unter Ausbildung jeweils einer Masche (M1,...,Me) jeder folgende Schlaufenabschnitt (S2,...,Se) durch die Schlaufenöffnung (O) des bezogen auf ihn jeweils nächstbenachbart angeordneten vorangehenden Schlaufenabschnitts (S1,...,Se-1) geführt ist.

5. Zugaufnahmemittel nach einem der voranstehenden Ansprüche, **dadurch gekennzeichnet, dass** am Ende (E) des Strangs (1) ein Befestigungsabschnitt (B) ausgebildet ist.

6. Zugaufnahmemittel nach Anspruch 5, **dadurch gekennzeichnet, dass** der Befestigungsabschnitt (B) mit einem Anschlagglied (3) verkoppelt ist, dass gleichzeitig durch die Schlaufenöffnung (0) des letzten, dem Ende E des Strangs (1) zugeordneten Schlaufenabschnitts (Se) greift.

7. Zugaufnahmemittel nach einem der voranstehenden Ansprüche, **dadurch gekennzeichnet, dass** der Strang (1) ein textiler Strang (1) ist.

8. Zugaufnahmemittel nach einem der voranstehenden Ansprüche, **dadurch gekennzeichnet, dass** der Strang (1) ein Seil oder ein Band ist.

9. Zugaufnahmemittel nach einem der Ansprüche 2 bis 8, **dadurch gekennzeichnet, dass** die Längenabschnitte (La,Le) der Schlaufenabschnitte (S1,...,Se) jeweils durch ein die Längenabschnitte (La,Le) durchgreifendes Verbindungselement (N) miteinander verbunden sind.

10. Zugaufnähmemittel nach Anspruch 9, **dadurch gekennzeichnet, dass** die Längenabschnitte (La,Le) der Schlaufenabschnitte (S1,...,Se) jeweils miteinander vernäht sind.

11. Zugaufnahmemittel nach einem der voranstehenden Ansprüche, **dadurch gekennzeichnet, dass** die Längenabschnitte (La,Le) der Schlaufenabschnitte (S1,...,Se) jeweils mit Hilfe eines die jeweiligen Längenabschnitte (La,Le) umgreifenden Verbindungselements miteinander verbunden sind.

12. Zugaufnahmemittel nach einem der voranstehenden Ansprüche, **dadurch gekennzeichnet, dass** die zwischen den Schlaufenabschnitten (S1,...,Se) vorhandenen Teilstücke des Strangs (1) gleich lang sind.

13. Zugaufnahmemittel nach einem der voranstehenden Ansprüche, **dadurch gekennzeichnet, dass** die Länge der Schlaufenabschnitte (S1,...,Se) gleich ist.

14. Zugaufnahmemittel nach einem der voranstehenden Ansprüche, **dadurch gekennzeichnet, dass** die Länge (LT) der Längenabschnitte (La,Le) der Schlaufenabschnitte (S1,...,Se) gleich ist.

15. Zugaufnahmemittel nach einem der voranstehenden Ansprüche, **dadurch gekennzeichnet, dass** der Strang (1) mit einem zusätzlichen Funktionselement versehen ist.

## Claims

1. Tension absorbing means produced from a flexible strand (1) which is only loadable under tension, **characterised in that**
- the strand (1) is folded into three or more loop sections (S1,...,Se),
- proceeding from the beginning (A) of the strand (1) a succeeding loop section (S2,...,Se) arranged offset in the direction of the end of the strand (1) follows each preceding loop section (S1,...,Se-1) arranged offset in the direction of the beginning (A), until the last loop section (Se) has been reached,
- each loop section (S1,...,Se) has a loop (S) which encloses a loop opening (0), and **in that**
- at least one bow (M1,...,Me) is formed from the strand (1) by guiding a succeeding loop section (S2,...,Se) by its loop (S) through the loop opening (0) of a preceding loop section (S1,...,Se-1) arranged adjacent to it.

2. Tension absorbing means according to Claim 1, **characterised in that** each loop section (S1,...,Se) has two longitudinal sections (La,Le) which in each case abut with their one end on the loop (S) of the respective loop section (S1,...,Se) and are durably firmly joined together lying adjacent to one another over their length (LL).

3. Tension absorbing means according to any one of the preceding claims, **characterised in that** a first bow (Mo1) of the strand (1) is formed by the first preceding loop section (S1) assigned to the beginning (A) of the strand (1) and a succeeding loop section (S2) arranged adjacent to it, and **in that** the beginning (A) of the strand (1), from which the tension absorbing means (2) is produced, forms the beginning (A) of the one longitudinal section (La) of the first loop section (S1).

4. Tension absorbing means according to any one of the preceding claims, **characterised in that** the strand (1) is interlooped at regular intervals by guiding each succeeding loop section (S2,...,Se) through the loop opening (O) of the preceding loop section (S1,...,Se-1) which in each case is arranged closest adjacent in relation to it, in each case forming a bow (M1,...,Me).

5. Tension absorbing means according to any one of the preceding claims, **characterised in that** a fastening section (B) is formed at the end (E) of the strand (1).

6. Tension absorbing means according to Claim 5, **characterised in that** the fastening section (B) is coupled to an attachment element (3) which, at the same time, grips through the loop opening (O) of the last loop section (Se) assigned to the end (E) of the strand (1).

7. Tension absorbing means according to any one of the preceding claims, **characterised in that** the strand (1) is a textile strand (1).

8. Tension absorbing means according to any one of the preceding claims, **characterised in that** the strand (1) is a rope or a strap.

9. Tension absorbing means according to any one of Claims 2 to 8, **characterised in that** longitudinal sections (La,Le) of the loop sections (S1,...,Se) are in each case joined together by a joining element (N) which grips through the longitudinal sections (La,Le).

10. Tension absorbing means according to Claim 9, **characterised in that** the longitudinal sections (La,Le) of the loop sections (S1,...,Se) are in each case sewed together.

11. Tension absorbing means according to any one of the preceding claims, **characterised in that** the longitudinal sections (La,Le) of the loop sections (S1,...,Se) are in each case joined together by means of a joining element encompassing the respective longitudinal sections (La,Le).

12. Tension absorbing means according to any one of the preceding claims, **characterised in that** the segments of the strand (1) between the loop sections (S1,...,Se) are of equal length.

13. Tension absorbing means according to any one of the preceding claims, **characterised in that** the length of the loop sections (S1,...,Se) is the same.

14. Tension absorbing means according to any one of the preceding claims, **characterised in that** the length (LT) of the longitudinal sections (La,Le) of the loop sections (S1,...,Se) is the same.

15. Tension absorbing means according to any one of the preceding claims, **characterised in that** the strand (1) is provided with an additional functional element.

## Revendications

1. Moyen d'absorption de traction, fabriqué à partir d'une corde (1) souple en flexion et susceptible d'être sollicitée uniquement en traction, **caractérisé en ce que**
- la corde (1) forme trois portions de boucles (S1,..., Se) ou plus,
- à partir du début (A) de la corde (1), chaque portion de boucle (S1,..., Se-1) précédente agencée décalée en direction du début (A) est suivie d'une portion de boucle (S2,..., Se) agencée décalée en direction de la fin de la corde (1) jusqu'à atteindre la dernière portion de boucle (Se),
- chaque portion de boucle (S1, ..., Se) présente une boucle (S) qui délimite une ouverture de boucle (0), et
- à partir de la corde (1), au moins une maille (M1,..., Me) est formée en guidant une portion de boucle suivante (S2,..., Se) avec sa boucle (S) à travers l'ouverture de boucle (0) d'une portion de boucle (S1,..., Se-1) précédente agencée adjacente à ladite portion.

2. Moyen d'absorption de traction selon la revendication 1, **caractérisé en ce que** chaque portion de boucle (S1, ..., Se) présente deux sections longitudinales (La, Le) qui sont respectivement adjacentes par une de leurs extrémités à la boucle (S) de la portion de boucle (S1, ..., Se) concernée et qui sont solidement assemblées juxtaposées de manière durable l'une à l'autre par leur longueur (LL).

3. Moyen d'absorption de traction selon une des revendications précédentes, **caractérisé en ce qu'**une première maille (Mo1) de la corde (1) est formée par la première portion de boucle précédente (S1) dirigée vers le début (A) de la corde (1) et une portion de boucle suivante (S2) agencée adjacente et que le début (A) de la corde (1), à partir de laquelle le moyen d'absorption de traction (2) est fabriqué, forme le début (A) d'une section longitudinale (La) de la première portion de boucle (S1).

4. Moyen d'absorption de traction selon une des revendications précédentes, **caractérisé en ce que** la corde (1) est régulièrement maillée, notamment en formation, en guidant respectivement une maille (M1, ..., Me) de chaque portion de boucle suivante (S2, ..., Se) à travers l'ouverture de boucle (0) de la portion de boucle précédente (S1, ..., Se-1) respectivement agencée la plus proche par rapport à ladite portion.

5. Moyen d'absorption de traction selon une des revendications précédentes, **caractérisé en ce qu'**une partie de fixation (B) est conçue au niveau de l'extrémité (E) de la corde (1).

6. Moyen d'absorption de traction selon la revendication 5, **caractérisé en ce que** la partie de fixation (B) est couplée à un élément d'arrêt (3) qui entre en prise simultanément à travers l'ouverture de boucle (0) de la dernière portion de boucle (Se) dirigée vers l'extrémité E de la corde (1).

7. Moyen d'absorption de traction selon une des revendications précédentes, **caractérisé en ce que** la corde (1) est une corde textile (1).

8. Moyen d'absorption de traction selon une des revendications précédentes, **caractérisé en ce que** la corde (1) est un câble ou une bande.

9. Moyen d'absorption de traction selon une des revendications de 2 à 8, **caractérisé en ce que** les sections longitudinales (La, Le) des portions de boucle (S1, ..., Se) sont respectivement reliées l'une à l'autre à l'aide d'un élément de raccordement (N) traversant les sections longitudinales (La, Le).

10. Moyen d'absorption de traction selon la revendication 9, **caractérisé en ce que** les sections longitudinales (La, Le) des portions de boucle (S1, ..., Se) sont respectivement cousues ensemble.

11. Moyen d'absorption de traction selon une des revendications précédentes, **caractérisé en ce que** les sections longitudinales (La, Le) des portions de boucle (S1, ..., Se) sont reliées l'une à l'autre à l'aide d'un élément de raccordement entourant les sections longitudinales respectives (La, Le).

12. Moyen d'absorption de traction selon une des revendications précédentes, **caractérisé en ce que** les segments de la corde (1) existants entre les portions de boucle (S1, ..., Se) ont tous une longueur identique.

13. Moyen d'absorption de traction selon une des revendications précédentes, **caractérisé en ce que** la longueur des portions de boucle (S1, ..., Se) est identique.

14. Moyen d'absorption de traction selon une des revendications précédentes, **caractérisé en ce que** la longueur (LT) des sections longitudinales (La, Le) des portions de boucle (S1, ..., Se) est identique.

15. Moyen d'absorption de traction selon une des revendications précédentes, **caractérisé en ce que** la corde (1) est pourvue d'un élément fonctionnel supplémentaire.
